# EUROPÄISCHE PATENTSCHRIFT

(11) **EP 3 036 560 B1**
(45) Veröffentlichungstag und Bekanntmachung des Hinweises auf die Patenterteilung: **11.10.2017**
(21) Anmeldenummer: 14753099.2
(22) Anmeldetag: 21.08.2014
(51) Int. Cl.: G01S 7/497, G01S 7/486, G01S 17/02

(54) **VERFAHREN ZUR KALIBRIERUNG EINER VORRICHTUNG ZUR VERMESSUNG EINER OPTISCHEN SIGNALÜBERTRAGUNGSSTRECKE**
METHOD FOR CALIBRATING AN APPARATUS FOR MEASURING AN OPTICAL SIGNAL TRANSMISSION PATH
PROCÉDÉ D'ÉTALONNAGE D'UN DISPOSITIF DE MESURE D'UNE LIGNE DE TRANSMISSION DE SIGNAUX OPTIQUES

(30) Priorität: 22.08.2013 WO PCT/EP2013/067483
(43) Veröffentlichungstag der Anmeldung: 29.06.2016
(73) Patentinhaber: Elmos Semiconductor Aktiengesellschaft, 44227 Dortmund (DE)
(72) Erfinder: STELLBERGER, Achim, 76646 Bruchsal (DE); KILIAN, Markus, 76646 Bruchsal (DE); HASE, Michael, 76646 Bruchsal (DE)
(74) Vertreter: dompatent von Kreisler Selting Werner - Partnerschaft von Patent- und Rechtsanwälten mbB
(86) Internationale Anmeldenummer: PCT/EP2014/067846
(87) Internationale Veröffentlichungsnummer: WO 2015/025009

(56) Entgegenhaltungen:
- EP-A1- 1 426 783
- WO-A1-01/54276

## Beschreibung

Die Erfindung betrifft ein Verfahren zur Kalibrierung einer Vorrichtung zur. Vermessung einer optischen Signalübertragungsstrecke insbesondere für die Erkennung eines Objekts und/oder für die Erkennung einer Bewegung und/oder einer Bewegungsrichtung eines Objekts.

Hierbei wird typischerweise eine Fotodiode in Sperrrichtung betrieben. Es hat sich als besonders vorteilhaft erwiesen, die Fotodiode zur Kompensation eines aus (z.B. Umgebungs-)Störstrahlung resultierenden Fotostroms durch eine spannungsgesteuerte Stromquelle zu bestromen und in einem spannungsmäßig vorbestimmten Arbeitspunkt zu halten.

Bei Vorrichtungen zur optischen Signalübertragung, wie sie beispielsweise unter der Bezeichnung HALIOS^{®} bekannt sind, besteht ein Problem darin, dass die optische Kopplung der miteinander in optischer Wirkverbindung stehenden Elemente in relativ hohem Maße fertigungs- und montageabhängig ist. Daher ist es zweckmäßig, wenn derartige Vorrichtungen zur Vermessung einer optischen Signalübertragungsstrecke insbesondere automatisch kalibrierbar sind, und zwar nicht nur während bzw. nach der Herstellung der Vorrichtung, sondern auch während des Betriebs der Vorrichtung.

Beispiele für Vorrichtung der zuvor genannten Art sind in EP-A-1 426 783 und WO-A-01/54276 beschrieben.

Aufgabe der Erfindung ist es daher, ein Verfahren zur Kalibrierung einer Vorrichtung zur Vermessung einer optischen Signalübertragungsstrecke insbesondere für die Erkennung eines Objekts und/oder für die Erkennung einer Bewegung und/oder einer Bewegungsrichtung eines Objekts zu schaffen, mit dem sich der Einsatzbereich der Vorrichtung verbessern und erweitern lässt.

Zur Lösung dieser Aufgabe wird mit der Erfindung ein Verfahren nach Anspruch 1 zur Kalibrierung einer Vorrichtung zur Vermessung einer optischen Signalübertragungsstrecke insbesondere für die Erkennung eines Objekts und/oder für die Erkennung einer Bewegung und/oder einer Bewegungsrichtung eines Objekts vorgeschlagen.

Bei der erfindungsgemäß zu kalibrierenden Vorrichtung zur Vermessung einer optischen Signalübertragungsstrecke wird sowohl für den mindestens einen Messsender als auch für den mindestens einen Kompensationssender mit modulierten Signalen gearbeitet, wobei diese Signale gegenphasig, also um 180° phasenverschoben sind. Die Vorrichtung befindet sich dann in ihrem ausgeregelten Zustand, wenn der mindestens eine Empfänger ein Gleichsignal empfängt, die Amplituden der optischen Signale von Messsender und Kompensationssender also gleich sind. Dieses ausgeregelte System wird in dem Augenblick "gestört", indem sich in der optischen Signalübertragungsstrecke zwischen dem mindestens einen Messsender und dem mindestens einen Empfänger ein zuvor nicht existentes Objekt befindet. Dieses Objekt reflektiert nämlich Anteile des optischen Messsignals in den mindestens einen Empfänger hinein. Je weiter das Objekt vom mindestens einen Messsender bzw. mindestens einen Empfänger entfernt ist, desto schwächer ist das reflektierte Signal, das der Empfänger noch empfängt. Durch beispielsweise Differenzbildung des empfangenen Kompensationssignals und des empfangenen, am Objekt reflektierten Messsignals kann dann ein für die Entfernung des Objekts repräsentatives Auswertesignal ermittelt werden. Wie bereits oben erwähnt, ist diese Art der Vermessung optischer Signalübertragungsstrecken unter der Bezeichnung HALIOS bekannt und beispielsweise in DE-A-102 56 429 beschrieben.

Eine solche Vorrichtung lässt sich erfindungsgemäß dadurch kompensieren, dass dafür gesorgt wird, dass sich auch bei kleinsten Amplituden des von einem Objekt reflektierten und vom Empfänger empfangenen Messsignals eine Auswertung möglich ist. Die kleinsten noch zu verarbeitenden Signale der Vorrichtung zur Vermessung der optischen Signalübertragungsstrecke werden in erster Linie vom Systemrauschen bestimmt, was wiederum in erster Linie vom Rauschverhalten des Empfängers und/oder der Ansteuer- und Auswerteeinheit bestimmt ist. Das Problem ist, dass das Systemrauschen von Vorrichtung zu Vorrichtung verschieden sein kann, da selbst bei ein und derselben Applikation die optische Kopplung von Vorrichtung zu Vorrichtung verschieden sein kann. Daher muss also das Systemrauschen jeder Vorrichtung vermessbar sein, um die Vorrichtung kalibrieren zu können.

Erfindungsgemäß wird hierzu bei der Vorrichtung zur Vermessung einer optischen Signalübertragungsstrecke der mindestens eine Kompensationssender genutzt, indem dieser Sender bei deaktiviertem Messsender bzw. deaktivierten Messsendern betrieben wird, bis sich in der Ansteuer- und Auswerteeinheit ein elektrisches Signal einstellt, welches oberhalb des Systemrauschens liegt und damit "detektierbar" ist. Die Amplitude des Kompensationssignals, die zu einem (gerade) noch "detektierbaren" elektrischen Signal innerhalb der Ansteuer- und Auswerteeinheit, d.h. zu einem Messsignal oberhalb des Systemrauschens führt, wird nun genutzt, um mit dieser Amplitude ein Synchron zum optischen Messsignal liegendes elektrisches Offset-Signal bereitzustellen, das während der späteren Nutzung der Vorrichtung zwecks Vermessens einer optischen Signalübertragungsstrecke dem optischen Messsignal überlagert wird. Damit liegen also auch geringste von dem Empfänger empfangene Anteile des Messsignals oberhalb des Systemrauschens vor und können damit in der Ansteuer- und Auswerteeinheit zur Bildung eines Auswertesignals, das die Entfernung eines Objekts von der Vorrichtung repräsentiert, genutzt werden. Darüber hinaus verhält sich jede dergestalt kalibrierte Vorrichtung gleich (selbstverständlich unter Zugrundelegung des gleichen Applikationstyps).

Es sei an dieser Stelle nochmals hervorgehoben, dass während der Kalibration der mindestens eine Messender bzw. jeder Messsender vollständig deaktiviert ist, also nicht mit modulierten Ansteuersignalen beaufschlagt wird. Während der Kalibrationsphase wird also ausschließlich der Kompensationssender betrieben, und zwar mit einem modulierten Signal.

Es ist zweckmäßig, die Amplitude des Kompensationssignals von geringen Werten, insbesondere auch von null an zu größeren Werten hin zu steigern, um zu ermitteln, ab wann das sich in der Ansteuer- und Auswerteeinheit einstellende elektrische Messsignal eine Amplitude oberhalb des Systemrauschens hat. Eine Annäherung an diesen Arbeitspunkt "von oben" ist grundsätzlich auch möglich, setzt aber voraus, dass die Amplitude des Kompensationssignals zumindest einmal zu einem elektrischen Messsignal mit einer Amplitude, die kleiner als das Systemrauschen ist, führt, um ab diesem Punkt die Amplitude des Kompensationssignals dann wieder zu erhöhen, bis das elektrische Messsignal der Ansteuer- und Auswerteeinheit eine Amplitude geringfügig oberhalb des Systemrauschens aufweist.

Die Erfindung wird nachfolgend anhand eines Ausführungsbeispiels sowie unter Bezugnahme auf die Zeichnung näher erläutert. Im Einzelnen zeigen dabei:
- Fig. 1: eine Übersicht über das Gesamtsystem als Blockschaltungsdiagramm,

- Fig. 2: den Zeitverlauf verschiedener Signale des Gesamtsystems gemäß Fig. 1 während eines Messintervalls bzw. während eines Messzyklus und
- Fign. 3 und 4: Diagramme zur Verdeutlichung einer (Auto-)Kalibrierung des Gesamtsystems.

Die Erfindung wird nachfolgend anhand einer Vorrichtung zur störstrahlungskompensierten Ansteuerung einer Fotodiode und zur Auswertung des Fotostroms beschrieben, die allerdings Merkmale enthält, die zur Realisierung der Erfindung nicht zwingend erforderlich sind.

Bei der störstrahlungskompensierten Vorrichtung wird die Empfangsdiode D über zwei Anschlüsse betrieben. Über die Schaltungsknoten 61,62 wird die Empfangsdiode D von zwei gesteuerten Stromquellen 27,28 bestromt. Hierbei erfassen zwei Verstärker 26,29 die Potenziale auf den von den Anschlüssen ausgehenden Eingangsleitungen 30,31. Ändert sich der Arbeitspunkt der Diode zum Beispiel durch permanente Bestrahlung mit Sonnenlicht, so ändert sich der generierte Fotostrom. Der Spannungsabfall über der Empfangsdiode D ändert sich und die Arbeitspotenziale der Eingangsleitungen 30,31 und damit an den Eingängen der Verstärker 26,29. Dieses wird durch die Verstärker 26,29 registriert. Diese vergleichen die Potenziale auf den Eingangsleitungen 30,31 jeweils mit einem Referenzpotenzial Ref1, Ref2. Die Ausgänge der Verstärker 26,29 regeln die Stromquellen 27,28 nun so nach, dass die Spannungswerte der Eingangsleitungen 30, 31 wieder den Vorgaben entsprechen. Koppelkondensatoren 24,25 bilden eine Barriere für die Gleichspannungspegel auf den Eingangsleitungen 30,31 zu nachgeordneten Schaltungen. Die Kondensatoren 24,25 sind auf der den Anschlüssen abgewandten Seite mit den Eingängen zu Messverstärkern 18,19 verbunden. Die Ausgänge 33,34 der Messverstärker 18,19 sind jeweils über einstellbare Kapazitäten 20 bzw. 21 auf ihre Eingänge zurückgekoppelt. Eine Differenzstufe 35 bildet das Differenzsignal 63 der beiden Verstärkerausgangssignale. Im Idealfall soll dieses Signal 63 das Nutzsignal der Fotodiode darstellen.

Wie bereits zuvor beschrieben, führt die oben skizzierte Regelung durch die Verstärker 26,29 der beiden spannungsgesteuerten Stromquellen 27 bzw. 28 und die Änderung der Einstellung der Stromquellen 27,28 zu einer Belastung des Nutzsignals, was die Reichweite massiv einschränkt.

Der erfindungsgemäßen Vorrichtung bzw. dem erfindungsgemäßen Verfahren liegt nun die Erkenntnis zugrunde, dass bei den meisten Anwendungen, insbesondere im Zusammenhang mit einer Gestensteuerung für mobile Geräte, ein permanenter Messbetrieb gar nicht notwendig oder erwünscht ist. Ein solcher Betreib verbraucht Energie, die insbesondere bei mobilen Geräten äußerst "kostbar", weil nur begrenzt verfügbar, ist.

Die Vorrichtung sollte also zeitabhängig in verschiedenen Systemzuständen, d.h. in einzelnen zeitlich getrennten und aufeinanderfolgenden Messintervallen betrieben werden, die jeweils mindestens eine Messphase aufweisen. In diesem Messzustand wird die Nachregelung durch die Stromquellen 27,28 praktisch ausgeschaltet. Einzig die Kondensatoren 24,25 halten die jeweiligen Arbeitspunkte. Dies ist gleichzusetzen mit einer Änderung des Innenwiderstands der Stromquellen 27,28.

Eine solche schlechte (weil "träge") Regelung verhindert aber die Anpassung an eine Fremdlichtbestrahlung. Es ist daher sinnvoll, pro Messintervall einen weiteren Zustand, nämlich eine (Mess-)Vorbereitungsphase zu definieren, in der der Innenwiderstand der Stromquellen 27,28 minimal ist. In diesem Zustand regeln die Stromquellen schnell nach. Ein Nutzsignal würde in der Vorbereitungsphase stark belastet und verfälscht. Daher wird in dieser Vorbereitungsphase noch keine Messung durchgeführt.

In einer nicht gezeigten Sample-and-Hold-Schaltung wird das Ergebnis der jeweiligen Messung typischerweise zwischengespeichert.

Ein Problem, das sich jedoch nun ergibt, besteht darin, dass eine Störung, die während einer Messung auftritt, die Messverstärker 18,19 über- oder untersteuern kann.

Ein solchermaßen gestörtes Messergebnis ist nicht verwendbar. Daher ist es sinnvoll, das Messergebnis quantitativ zu bewerten.

Im einfachsten Fall kann dies beispielsweise dadurch geschehen, dass die Messverstärker 18,19 je ein Signal für Übersteuerung und je ein Signal für Untersteuerung ausgeben. Somit sind 16 Zustände des Systems von zwei Messverstärkern 18,19 mit je zwei Bewertungssignalen möglich. Von diesen sind nicht alle sinnvoll, da beispielsweise eine gleichzeitig auftretende Über- und Untersteuerung nicht realistisch, jedoch trotzdem fehlerhaft ist.

Trotzdem bildet das vier-Bit-Wort, das auf diese Weise gebildet wird, eine quantitative Bewertung jedes Messergebnisses.

Im Gegensatz zum Stand der Technik werden also keine Transimpedanzverstärker, sondern Integratoren, die Teil der besagten Messverstärker 18, 19 sind, am Eingang des Systems verwendet.

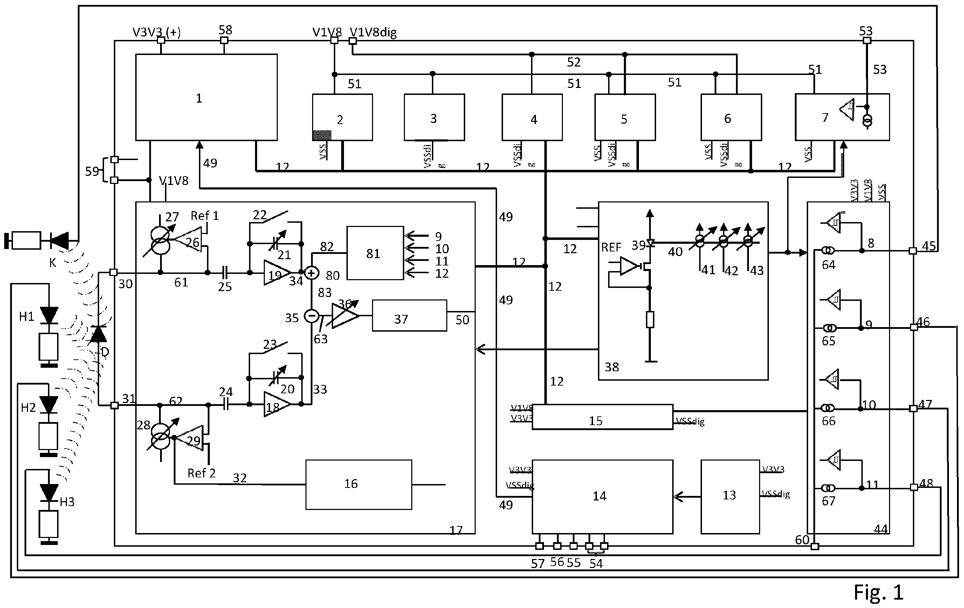

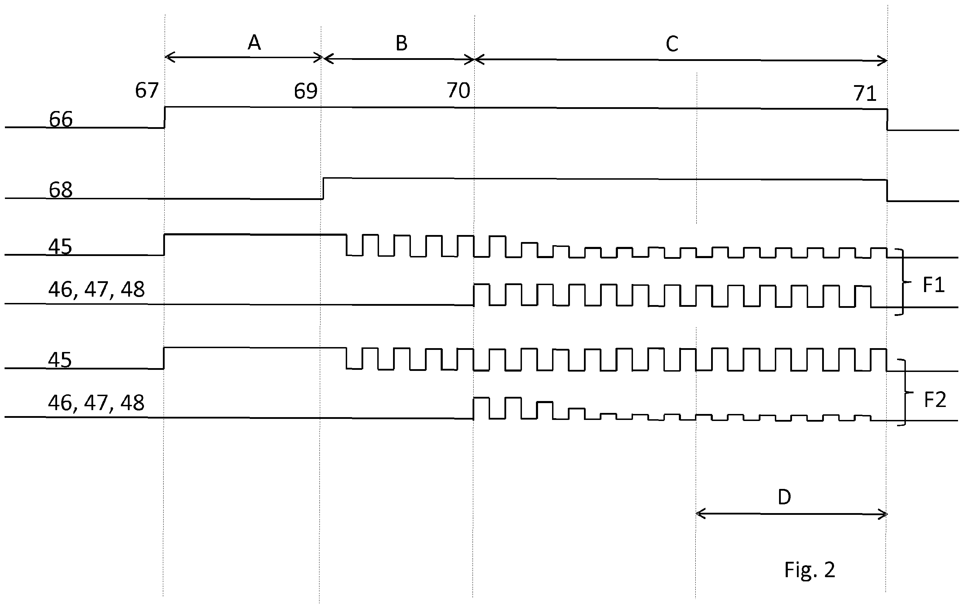

Der Ablauf eines Messintervalls wird beispielsweise durch den Digital-Control-Block 4 des (Block-)Schaltbilds nach Fig. 1 gesteuert. Durch dessen Ablaufsteuerung wird ein Messungsaktivierungssignal "Measure" (Bezugszeichen 66, Fig. 2) zu Beginn der Messung (Bezugszeichen 67, Fig. 2) aktiviert. Damit beginnt die erste Vorbereitungsphase A. In dieser Phase A regeln die Stromquellen 27,28 niederohmig den Arbeitspunkt der Empfangsdiode D nach. Der Ausgang der Stromversorgung für eine Kompensationsdiode K wird aktiv geschaltet. Hierdurch bestrahlt die Kompensationsdiode K bereits die Fotodiode D. Die Kompensationsdiode K wird zunächst nicht moduliert. Durch die Niederohmigkeit der Stromquellen 27,28 kommen die Messverstärker 18,19 schnell in ihre Arbeitspunkte. Die Kapazitäten 20,21 bzw. Koppelkondensatoren 24,25 werden auf ihre Arbeitspegel aufgeladen. Die Stromquellen 64,65,66,67 für den Betrieb von in diesem Ausführungsbeispiel drei Messsendedioden H1,H2,H3 (wegen der mehrdimensionalen insbesondere 3D-Gestenerkennung) und die Kompensationsdiode K werden auf die jeweiligen Betriebswerte eingestellt.

Am Ende der Phase A zum Zeitpunkt 69 (Fig. 2) wird das Signal "hold" (siehe Bezugszeichen 68, Fig. 2) aktiv. Die spannungsgesteuerten Stromquellen 27,28 gehen von ihren bis dahin eingenommenen niederohmigen in einen hochohmigen Zustand. Damit werden ihre Arbeitspunkte "eingefroren". Zu diesem Zeitpunkt sollte das Differenzsignal 63 der Ausgänge der Messverstärker 18,19 konstant Null sein, da die Arbeitspunkte eingeregelt sind.

Da auch das Umschalten in den hochohmigen Zustand zu Störungen führt, ist es sinnvoll, noch einige Zeit verstreichen zu lassen, bis die eigentliche Messung beginnt. Diese Zeit wird Stabilisierungsphase oder zweite Vorbereitungsphase B (Fig. 2) genannt. Sie endet zum Zeitpunkt 70 (Fig. 2).

Im einfachsten Fall handelt es sich bei den Modulationssignalen 45,46,47,48 für die Kompensationsdiode K bzw. für die Messsendedioden H1,H2,H3 um 180° phasenverschobene Rechtecksignale, die in der Amplitude regelbar sind. (siehe in Messphase C Fig. 2).

Die Messung beginnt, indem z. B. die Abstrahlung der Kompensationsdiode abgeschwächt oder gar ausgeschaltet wird (siehe Bezugszeichen 45 und 69 in Fign. 1 und 2). Gleichzeitig wird typischerweise mindestens eines der Sendesignale (siehe Bezugszeichen 46 und/oder 46 und/oder 47 in Fign. 1 und 2) eingeschaltet. Die typischerweise mindestens eine Messsendediode H1 und/oder H2 und/oder H3 bestrahlt mit Umweg über die zu vermessende Übertragungsstrecke die (Empfangs-)Fotodiode D. Bei mehreren Sendedioden werden diese (z.B. zyklisch) sequentiell angesteuert.

Die Kompensationssendediode K und die typischerweise mindestens eine Messsendediode H1 oder H2 oder H3 werden abwechselnd abgeschwächt bzw. zu verstärkter Abstrahlung veranlasst. Zunächst wird dies zu einer verbleibenden Modulation des Ausgangssignals der Eingangsstufe führen. Nach einer Verstärkung durch einen Verstärker 36 kann das so empfangene modulierte Signal mit einem Demodulator in ein Gleichsignal verwandelt werden. Dies kann zur Regelung der Amplitude der Modulation der einen Messsendediode oder jeweils einer der Sendedioden H1,H2,H3 und/ oder der Amplitude der Modulation der Kompensationsdiode K verwendet werden.

In Fig. 2 wird beispielhaft als Fall F1 eine Regelung der Kompensationsdiode K gezeigt und als Fall F2 eine Regelung der Messsendediode bzw. -dioden H1,H2,H3. Die Regelung kann dabei für die Messsendedioden H1,H2 und H3 unterschiedlich sein. Typischerweise werden darüber hinaus die Messsendedioden H1,H2 und H3 nicht gleichzeitig sondern zeitversetzt betrieben. Dabei können auch mehr als eine Empfangsdiode zum Einsatz kommen. Der Zeitversatz wird dabei typischerweise so gewählt, dass immer nur eine Empfangsdiode D und eine Sendediode H1,H2,H3 gleichzeitig aktiv sind.

Im Folgenden wird die Regelung über die Änderung der Modulationsamplitude der Sendediode H1,H2,H3 erläutert.

Hierbei regelt der so erhaltene Messwert die Amplitude der jeweiligen Messsendediode H1,H2,H3 nach. Es hat sich gezeigt, dass es sinnvoll ist, diesen Wert vor der Gegenkopplung zu verstärken. Dieses Prinzip ist auch aus Operationsverstärkerschaltungen bekannt und dient der Unterdrückung parasitärer Faktoren und Einflüsse. Zum besseren Verständnis sei hier auf die nachfolgend genannten Schriften und Patentanmeldungen verwiesen: DE-B-103 46 741, EP-A-2 546 620, EP-A-2 356 000, EP-B-1 410 507, EP-B-1 435 509, EP-A-2 418 512, EP-B-1 269 629, DE-A-103 22 552, DE-B-10 2004 025 345, EP-A-2 405 283, DE-C-44 11 773, WO-A-2012/163725, DE-A-2006 020 579, DE-B-10 2005 045 993, EP-B-1 979 764, DE-A-10 2012 024 778, DE-A-10 2013 000 376, DE10 2013 003 791.3, DEA-10 2013 000 380, WO-A-2014/096385, WO-A-2013/124018, DE-B-10 2013 002 304, EP-A-2 624 019, DE-A-10 2012 025 564, DE 10 2013 002 674.1, DE-A-10 2013 222 936, DE-A-10 2012 015 442, DE-A-10 2012 015 423, DE-B-10 2012 024 597, EP-A-2 679 982, EP-A-2 597 482, DE-A-10 2013 002 676, EP-A-2 653 885.

Durch die Regelung stellt sich im Idealfall ein Gleichgewicht ein und das Ausgangssignal 50 des Demodulators 37 stellt nach der besagten Verstärkung ein Maß für die Dämpfung des Sendesignals im Übertragungskanal dar.

Die erfindungsgemäße Steuerung der Stromquellen 27,28 macht sich an den Eingangsleitungen 30,31 in einem Eingangswiderstand dahingehend bemerkbar, dass die Stromquellen in Abhängigkeit von typischerweise mindestens zwei Phasen eines Messzyklus (Bezugszeichen A und C, B und C oder A und B und C der Fig. 2) schwanken.

Natürlich ist die Wirksamkeit der spannungsgesteuerten Stromquellen 27,28 durch die realen Gegebenheiten eingeschränkt. Die Stromquellen 27,28 können nur bis zu einem Maximalstrom versuchen, den jeweils vorgegebenen Spannungspegel zu halten.

Das Messintervall (von Bezugszeichen 67, Fig. 2, bis Bezugszeichen 71, Fig. 2) wird dadurch beendet, dass das "Measure"-Signal (66) am Ende des Messzyklus (siehe Bezugszeichen 71, Fig. 2) wieder inaktiv wird. Alle Sendesignale werden abgeschaltet und das Messergebnis typischerweise beispielsweise in einer (nicht gezeichneten) Sample-and-Hold-Schaltung eingefroren.

Je nach Anwendung ist es sinnvoll, in regelmäßigen Zeitabständen ein derartiges Messintervall (von Bezugszeichen 67, Fig. 2, bis Bezugszeichen 71, Fig. 2) in kürzeren oder längeren Zeitabständen zu wiederholen. Höhere Wiederholfrequenzen für die Messsequenzen haben dabei allerdings eine höhere Stromaufnahme zur Folge.

Als eine weitere Maßnahme zur Verbesserung der optischen Abstandsmessung kann das System in die Lage versetzt sein, zumindest einige und typischerweise jeden Messwert mit einem Qualitätswert der Messung zu versehen, also eine Messsignalqualitätsermittlung durchzuführen. Diese Maßnahme bildet im Rahmen dieser Anmeldung einen selbstständigen Erfindungsgegenstand.

Somit ergibt sich bei mehreren aufeinanderfolgenden Messintervallen eine Folge von Messwerten mit zugehörigen Qualitätswerten, die es einem Messwertschätzer erlauben, einen optimierten Messwert zu schätzen und eine Wahrscheinlichkeit der Korrektheit dieses Messwertes anzugeben. Der daraus resultierende Messwertvektor kann beispielsweise als Basis für die Feature-Extraktion einer Gestenerkennung genutzt werden.

Dies ist insbesondere dann von Nutzen, wenn ein Störer nicht, wie z.B. Sonnenlicht, mit relativ niedriger Frequenz (beispielsweise aufgrund von Abschattung durch z.B. Bäume), sondern wie z.B. bei Leuchtstoffröhren oder bei der Fahrt in einem Cabrio im Sonnenschein unter Bäumen hindurch relativ schnell moduliert wird. Selbst wenn die Störungsfrequenz in der Nähe der Modulationsfrequenz der Messsendedioden H1,H2,H3 und des Kompensationssenders K liegt, wird diese Frequenz in der Regel nicht korrekt getroffen. Es kommt zu einer Schwebung im Regelsignal, die erkannt und genutzt werden kann. Die Qualität der Messung wird typischerweise mit der Schwebungsfrequenz zeitabhängig schwanken. Da das System infolge der Bewertung der Messergebnisse nur solche Messwertsequenzen auswertet, die relativ ungestört sind, kommt es de facto somit automatisch zu einer Abtastung des Messsignals nur zu relativ ungestörten Zeiten. Darüber hinaus ist es denkbar, dass nicht nur als gestört erkannte Messwerte verworfen werden, sondern auch solche, für die ein Schätzer eine hohe Störungswahrscheinlichkeit ermittelt. Dies können beispielsweise direkt vorausgehende oder direkt folgende Messwerte sein. Auch sollte ein solches Messsystem Gegenmaßnahmen bei erkannten Störungen einleiten.

Hierzu gehört beispielsweise eine Änderung der Messfrequenz. Dies kann sowohl die Wiederholfrequenz der Messintervalle als auch die Modulationsfrequenz der Messsendedioden H1,H2,H3 und der Kompensationssendediode K betreffen. Auch kann die Schaltung anders parametrisiert werden. Beispielsweise können die Zeitkonstanten der als Integratoren wirkenden Messverstärker 18,19 geändert werden, indem die Kapazitäten 20,21 veränderbar sind. Im Extremfall können die Integratoren durch Überbrückung ihrer Kapazitäten 20,21 mit Hilfe der programmierbaren Schalter 22,23 überbrückt werden. Es kommt also, wie man an diesem Beispiel sieht, auch eine Änderung der System- oder Schaltungstopologie in Frage. Die Integratoren werden dann zu reinen Impedanzwandlern.

Eine weitere Verbesserung der Vorrichtung kann also durch eine Beurteilung der Qualität des Messsignals und/oder durch eine Regelung zur Optimierung der Messergebnisse erreicht werden. Im Allgemeinen wird die Rückkopplungsschleife durch Software geschlossen, da die Regelalgorithmen sehr stark applikationsabhängig sind.

Als Stellglied für diese Messsignalqualitätsregelung dient typischerweise eine Änderung der Systemparameter und/oder der Systemtopologie oder -struktur.

Eine weitere Möglichkeit, die in die Qualitätsbewertung eines Messergebnisses einfließen kann, ist die Auswertung der Stromquellen-Ströme. Hierzu wird im Block 16 ("Extrinsic Light Measurement" bzw. "Messung des äußeren Lichtes") zeitabhängig der Strom gemessen, den die Stromquelle oder Stromquellen 27,28 liefern. Diese Messergebnisse können der Software zur Verfügung gestellt werden. Diese kann beispielsweise durch eine Fourier-Transformation die Störfrequenzen bestimmen, die das Messsignal stören. Es ist besonders vorteilhaft, die Modulationsfrequenz der Messsendedioden H1,H2,H3 und der Kompensationsdiode K und die Wiederholfrequenz der Messintervalle (Bezugszeichen 67, Fig. 2, bis Bezugszeichen 71, Fig. 2) jeweils so zu wählen, dass sie mit den Störfrequenzen möglichst nicht interferieren. Somit kann beispielsweise durch "Frequency-Hopping" die Störsignal-Robustheit angehoben werden.

Des Weiteren ist es denkbar, statt eines monofrequenten Sendesignals ein bandbegrenztes Signal zu verwenden und so schmalbandige Störer durch ein Spread-Spectra-Verfahren in ihrem Einfluss auf das Messergebnis zu reduzieren. Solche möglichen Sendesignale sind beispielsweise geeignete Pseudozufallsfolgen (siehe hierzu auch EP-A-2 631 674) Eine weitere einen selbstständigen Erfindungsgedanken repräsentierende Maßnahme ist die Einführung und/oder Anhebung einer Schwelle für die Erkennung der Annäherung eines Objekts an die Messsendedioden H1,H2,H3/Empfangsdiode D. Hierbei handelt es sich um eine nichtlineare Filterfunktion, die typischerweise in dem Block 37 der Fig. 1 realisiert ist, aber auch in einer nachfolgenden Verarbeitungsstufe realisiert sein kann. Dabei werden alle Messwerte unterhalb oder oberhalb einer Schwelle beispielsweise auf einen vordefinierten Wert fixiert.

Schließlich kann aufgrund der Messungen ein rechnerisches Modell eines Störers parametrisiert werden und Zeitpunkte und Einstellungsparameter für das Messsystem prognostiziert werden, bei und mit denen das nächste Messintervall mit einer besonders guten Qualität durchgeführt werden kann. Nachfolgend soll auf eine weitere Besonderheit der Schaltung nach Fig. 1 eingegangen werden, bei der es sich um einen weiteren selbstständigen Erfindungsgedanken handelt.

Gerade für mobile Anwendungen ist es besonders wichtig, möglichst wenig Energie zu verbrauchen. Daher ist es besonders günstig, wie oben beschrieben, die Messsendedioden bzw. eine der Messsendedioden H1,H2,H3 und nicht die Kompensationsdiode K zu modulieren und das System nur bei Bedarf zu betreiben. Um die erforderliche Betriebsenergie weiter zu reduzieren, ist es sinnvoll, das System nicht zu betreiben, wenn es beispielsweise komplett abgeschattet ist. Dies ist beispielsweise bei einem Einsatz in einem Mobiltelefon dann der Fall, wenn der Nutzer sich das Telefon zum Telefonieren an das Ohr hält. Für die Erkennung derartiger Nutzungssituationen ist es daher sinnvoll, einen weiteren, typischerweise passiven Sensor vorzusehen, der beispielsweise durch Messung des Umgebungslichts die Nutzungssituation vorklassifizieren kann. Auch hier ist ggf. der Einsatz einer innenwiderstandsmodulierten Störstrahlungs-Kompensationsschaltung sinnvoll, wenn modulierte Signale erkannt werden sollen. Die Schaltung gemäß Fig. 1 verfügt über eine solche Schnittstelle 53 (siehe in Fig. 1 oben rechts), die mit einer entsprechenden Eingangs-Hardware 7 versehen ist.

Darüber hinaus kann es sinnvoll sein, das ganze System in einen Energiesparmodus zu versetzen, um den Energieverbrauch noch weiter zu reduzieren. Hierbei muss beachtet werden, dass moderne integrierte Schaltungen typischerweise intern mit einer niedrigeren Spannung betrieben werden, als ihre Peripherie. Insoweit ist ein Spannungsregler 1 von Vorteil, der die internen Betriebsspannungen bereitstellt. Dieser Spannungsregler 1 verbraucht im Energiesparmodus unnötig Energie. Es ist daher sinnvoll, einen möglichst kleinen Teil (siehe Funktionsblock 14) der Schaltung so zu realisieren, dass er direkt mit der Betriebsspannung betrieben werden kann. Dieser Funktionsblock 14 hat einzig die Aufgabe, über eine Schnittstelle 54 bis 57 die Minimalkommunikation zum Hauptprozessor, mit dem das Messsystem kommuniziert, sicherzustellen. Die Schnittstelle weist beispielsweise eine serielle TX- und RX-Zweidraht-Leitung oder eine I²C-Bus-Schnittstelle 54, einen Interrupt-Ausgang 55 für den Hauptprozessor, der auf einem definierten Potenzial liegen muss, einen nicht maskierbaren Messsystem-Reset 56 und einer Referenzspannungseingang 57 auf. Alle anderen Systeme sind ausgeschaltet. Wenn möglich wird auch der normale Systemoszillator 6 abgeschaltet und stattdessen dieser Funktionsblock 14 der Schaltung mit einer niedrigen Frequenz aus einem Minimaloszillator 5 versorgt. Dieser ist wesentlich kleiner, da er nicht den gesamten IC treiben muss.

Somit sind im Energiesparmodus nur die Standard-Blöcke 14 und 6 aktiv. Ausgeschaltet ist insbesondere die Band-Gap-Referenz 2, der Block 4 (Digital-Control), der Spannungsregler 1 und alle Messverstärker und Empfangs- und Sendeeinrichtungen.

Handelt es sich bei der Schnittstelle 54 beispielsweise um eine I²C Schnittstelle, so ist es sinnvoll, den Funktionsblock 14 so zu gestalten, dass er nur einen ganz bestimmten Befehl auf dem Bus erkennen kann, der an eine ganz genau vorgegebene Registeradresse gesendet wird.

Ein solches Protokoll kann beispielsweise so aussehen, dass der Funktionsblock 14 eine Sequenz aus einem Start-Bit sowie der Slave-Adresse und aus einem Bit zur Signalisierung eines Schreibzugriffs erkennt und daraufhin ein Acknowledge-Bit ausgibt, woraufhin der Hauptprozessor die Registeradresse sendet, der Funktionsblock 14 ein Acknowledge-Bit sendet und der Hauptprozessor daraufhin ein Parity-Bit sendet. Hat der Funktionsblock 14 alle diese Daten als korrekt erkannt, werden der Spannungsregler, die Bandgap-Referenz 2 und alle anderen Teile der Schaltung in einer vordefinierten Sequenz nacheinander und/oder parallel, je nach Typ und Erfordernis, hochgefahren. Die normale I²C-Bus Kommunikation wird dann durch den Block 4 (Digital Control) wieder bis zu einem nächsten Einschlafbefehl übernommen. Nach Empfang eines solchen Einschlafbefehls veranlasst der Block 4 (Digital control) die wesentlichen Teile des Messsystems, in den Energiesparmodus überzugehen. Der letzte Teil der Abschaltsequenz muss jedoch vom Funktionsblock 14 gesteuert werden. Dies betrifft insbesondere die Abschaltung der Energieversorgung durch Abschaltung des Spannungsreglers 1, des Oszillators 6 und des Blocks 4 (Digital Control) selbst.

Es ist weiter sinnvoll, wenn der Funktionsblock 14 über einen internen Zeitgeber verfügt, der in regelmäßigen Abständen das System aufwecken kann, ohne dass es dazu des Empfangs eines Befehls des Hauptprozessors über die Schnittstelle 54 bedarf.

Es kann sinnvoll sein, wenn das System nach Durchführung von bezüglich Anzahl und Art vordefinierten Messungsintervallen wieder in den Energiesparmodus wechselt, ohne dass es hierzu eines gesonderten Befehls des Hauptprozessors über die Schnittstelle 54 von außen bedarf.

Hierbei ist es sinnvoll, wenn die Messwerte und vorzugsweise auch die Messwertqualitäten in einem (nicht gezeigten) Speicher abgelegt werden. Zu den dort abgelegten Messwerten können auch Konfigurationsdaten des Systems zählen (beispielsweise mit welchem der Sendedioden H1, H2, H3, mit welcher der Kompensationsdiode K und mit welcher Empfangsdiode D wann und mit welcher Qualität Messwerte aufgenommen wurden. Auch können dort die Messergebnisse weiterer Messignalbewertungsblöcke wie beispielsweise des Blocks 16 (Extrinsic Light Measurement) abgelegt werden.

Im normalen Messbetrieb darf aber trotz des Energiesparmodus keine Energie "verschwendet" werden. Daher kann beispielsweise die Bandgap-Referenz 2, die ja nur eine Referenzspannung für die Verwendung an verschiedenen Stellen im Messsystem liefert, zeitweise abgeschaltet werden, wenn deren Spannung beispielsweise in einer Sample-and-Hold-Schaltung zwischengespeichert und gepuffert ist. Die Bandgap-Schaltung wird dann nur zum Erneuern der unweigerlich langsam abfließenden Ladungen aus dem Speicherelement der Sample-and-Hold-Schaltung (typischerweise ein Kondensator) von Zeit zu Zeit angeschaltet.

Das für die vorliegende Erfindung wesentliche Merkmal ergibt sich aus der notwendigen Kalibration des Messsystems.

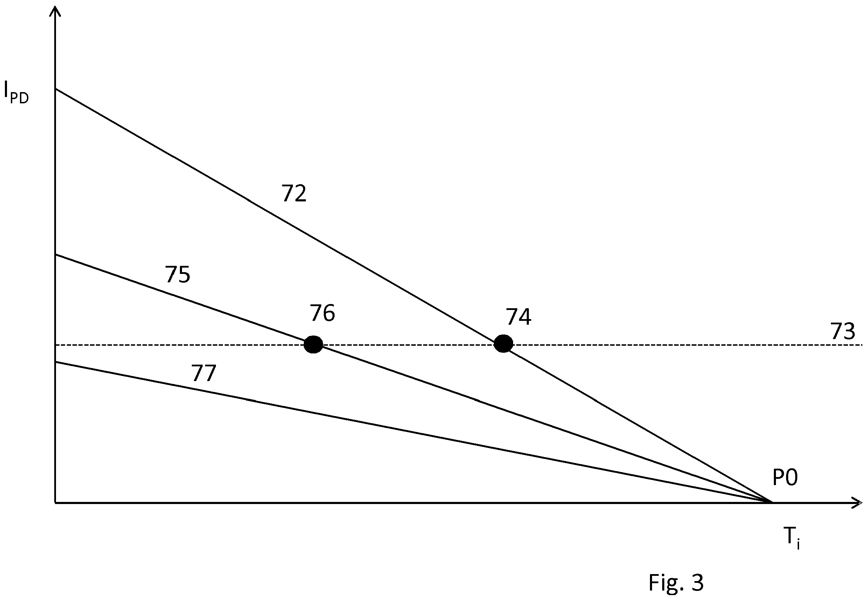

Hierzu ist in Fig. 3 die Regelcharakteristik des Systems bei Regelung der Sendediodenamplitude Tᵢ dargestellt. Die Amplitude des auf die jeweilige Messsendediode H1,H2,H3 zurückzuführenden Anteils (siehe 72,75,77 in Fig. 3) des Fotostroms I_{PD} in der/einer Empfangsdiode D hängt dabei von der Sendediodenamplitude Tᵢ ab. Die Amplitude des auf die Kompensationsdiode K bzw. jeweilige Kompensationsdiode K zurückzuführenden Anteils (siehe Linie 73 in Fig. 3) des Fotostroms I_{PD} in der/einer Empfangsdiode D hängt im Gegensatz dazu von der Senderamplitude Tᵢ nicht ab.

Wenn der Regler eingeschwungen ist, ist das Differenzsignal 63 ein Gleichsignal. Der auf das Sendesignal zurückzuführende Anteil ist dann im Differenzsignal 63 Null. Die maximale Distanz, ab der ein sich der Empfangsdiode näherndes Objekt bzw. bis zu der sich ein von der Empfangsdiode entfernendes Objekt noch erkannt werden kann, ist bestimmt durch die Regelcharakteristik und/oder Tatsache, dass bei maximaler Amplitude des Sendediodensignals von dem Objekt noch ein so großer Anteil des Sendediodensignals reflektiert wird, dass an der Empfangsdiode ein Signal mit mindestens der Amplitude des Kompensationsdiodensignals empfangen wird. Für einen großen Fotostrom 72, der gleichbedeutend mit einem nahen Objekt ist (und damit für eine steile Regelcharakteristik), ergibt sich dabei als Schnittpunkt mit 73 ein erster Arbeitspunkt 74. Für einen niedrigeren Fotostrom 75 (und damit bei flacherer Regelcharakteristik) ein weiterer zweiter Arbeitspunkt 76. Bei sehr weit entfernten Objekten kann das rückgestrahlte Licht aber so gering werden, dass sich überhaupt kein Arbeitspunkt mehr ergeben kann. Die Regelcharakteristik im Falle des Fotostroms 77 ist dann so flach, dass sich keine Kreuzung mehr mit der Linie 73 ergibt, die die Amplitude der Kompensationsdiode K repräsentiert, so dass keine sinnvolle Regelung möglich ist.

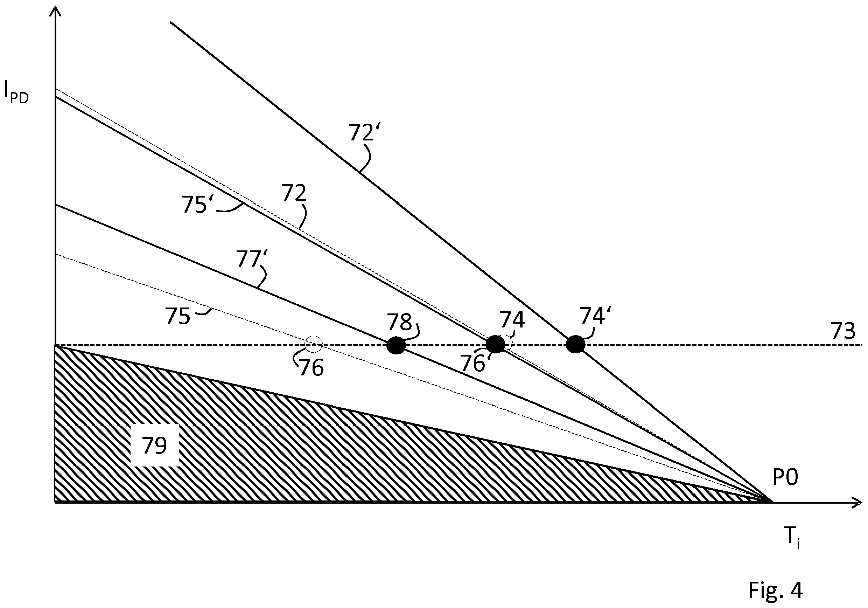

Hier bestehen nun zwei Möglichkeiten: Entweder wird das Kompensationsdiodensignal bei derartig schwachen Empfängersignalen herunter geregelt, was eine Mischregelung entspricht und einen höheren Schaltungsaufwand zu Folge hat, aber durchaus erfolgreich realisiert werden kann, oder zu dem Empfängersignal wird ein zum Sendesignal synchrones Offset-Signal hinzuaddiert, was die Arbeitspunkte 74,76 allesamt durch Dreh-Streckung um den Punkt P0 verschiebt (siehe 74',76' in Fig. 4) und einen neuen Arbeitspunkt 78 für den neuen Fotostrom 77' entstehen lässt. Das Offset-Signal führt zu einem nicht mehr erreichbaren Bereich 79 in dem Diagramm der Fig. 4. Die Erzeugung dieses Offset-Signals ist in Fig. 1 durch einen Kalibrationsblock 81 angedeutet, der für die jeweilige Sender-/Empfängerkombination aus den Sendersignalen 9 bis 12 das Offset-Signal 82 erzeugt, woraus das Signal 82 durch Addition erzeugt wird.

Für die Kalibration eines Gesamtsystems, die Teil das hier beschriebene System ist und einen weiteren selbstständigen erfindungsgemäßen Gedanken bildet, wird nun in einem definierten Messaufbau dieses Gesamtsystem vermessen. Das Gesamtsystem unterscheidet sich vom dem Messsystem beispielsweise dadurch, dass es neben dem Messsystem noch optische Elemente wie Spiegel, Blenden etc. und natürlich das Gehäuse umfasst.

Für die Kalibration wird die Kompensationsdiode K auf einen statischen Pegel geschaltet. Die Kopplung zwischen Empfangsdiode D und Kompensationsdiode K ist erfahrungsgemäß nur sehr schwer zu stabilisieren. Daher ist die Kopplung stets als für einen Applikationstyp gleich, aber von Applikation zu Applikation innerhalb des desselben Typs schwankend anzunehmen.

Die Kalibration erfolgt nun so, dass die schaltbaren Referenzstromquellen 41,42,43 vorgesehen werden, mit denen die Referenzstromversorgung 38 nun so eingestellt wird, dass der gemessene Fotostrom auf stets einen gleichen, applikationsspezifisch vorgegeben Wert eingestellt wird. Hierdurch kann die Ordinaten-Position der Linie 73 in den Fign. 3 und 4 vorgegeben werden. Somit wird sichergestellt, dass ein Arbeitspunkt gefunden wird. Dieser Arbeitspunkt wird dabei typischerweise in der Art eingestellt, dass der Kompensationssendediodenstrom so lange erhöht wird, bis das Kompensationssignal oberhalb des Systemrauschens messbar wird. Anschließend wird das Offset-Signal auf einen solchen Wert eingestellt, dass der unterste Arbeitspunkt eingenommen wird.

### BEZUGSZEICHENLISTE

- 1: Spannungsregler
- 2: Bandgap-Referenz
- 3: Funktionsblock
- 4: Digital-Control-Block
- 5: Minimaloszillator
- 6: Systemoszillator
- 7: Eingangs-Hardware
- 8: Signalleitung
- 9: Signalleitung
- 10: Signalleitung
- 11: Signalleitung
- 14: Funktionsblock
- 16: Funktionsblock
- 17: Ansteuer-/Auswerteeinheit
- 18: Messverstärker
- 19: Messverstärker
- 20: Kapazitäten
- 21: Kapazitäten
- 22: Schalter
- 23: Schalter
- 24: Koppelkondensatoren
- 25: Koppelkondensatoren
- 26: Verstärker
- 27: Stromquelle
- 28: Stromquelle
- 29: Verstärker
- 30: Eingangsleitung
- 31: Eingangsleitung
- 33: Ausgang
- 34: Ausgang
- 35: Differenzstufe
- 36: Verstärker
- 37: Demodulator
- 38: Referenzstromversorgung
- 41: Referenzstromquelle
- 42: Referenzstromquelle
- 43: Referenzstromquelle
- 45: Modulationssignal
- 46: Modulationssignal
- 47: Modulationssignal
- 48: Modulationssignal
- 50: Ausgangssignal
- 53: Schnittstelle
- 54: RX-Zweidraht-Leitung der Schnittstelle
- 55: Interrupt-Ausgang der Schnittstelle
- 56: Messsystem-Reset der Schnittstelle
- 57: Referenzspannungseingang der Schnittstelle
- 61: Schaltungsknoten
- 62: Schaltungsknoten
- 63: Differenzsignal
- 64: Stromquelle
- 65: Stromquelle
- 66: Stromquelle
- 67: Stromquelle
- 69: Zeitpunkt
- 70: Zeitpunkt
- 72: Fotostrom
- 73: Amplitude der Kompensationsdiode repräsentierende Linie
- 74: Arbeitspunkt
- 75: Fotostrom
- 76: Arbeitspunkt
- 77: Fotostrom
- 77': Fotostrom
- 78: Arbeitspunkt
- 79: Bereich
- 81: Kalibrationsblock
- 82: Offset-Signal
- H1: Messsendediode
- H2: Messsendediode
- H3: Messsendediode
- P0: Punkt
- Ref1: Referenzpotenzial
- Ref2: Referenzpotenzial

- A: erste Vorbereitungsphase des Messintervalls
- B: zweite Vorbereitungsphase des Messintervalls
- C: Messphase des Messintervalls
- D: Empfangsdiode
- K: Kompensationsdiode

## Patentansprüche

1. Verfahren zur Kalibrierung einer Vorrichtung zur Vermessung einer optischen Signalübertragungsstrecke insbesondere für die Erkennung eines Objekts und/oder für die Erkennung einer Bewegung und/oder einer Bewegungsrichtung eines Objekts,
- wobei die Vorrichtung versehen ist mit
- mindestens einem Messsender (H1,H2,H3) zum Senden eines optischen Messsignals,
- mindestens einem Kompensationssender (K) zum Senden eines zum optischen Signal des mindestens einen Messsenders (H1,H2,H3) gegenphasigen Kompensationssignals,
- mindestens einem Empfänger (D) zum wechselweisen Empfang des optischen Signals des mindestens einen Messsenders (H1,H2,H3) und des optischen Kompensationssignals des mindestens einen Kompensationssenders (K) und
- einer Ansteuer- und Auswerteeinheit (17) zur Ansteuerung des mindestens einen Messsenders (H1,H2,H3) mit einem ersten modulierten Ansteuersignal, des mindestens einen Kompensationssenders (K) mit einem zweiten modulierten Ansteuersignal und des mindestens einen Empfängers (D) zwecks Sendens des optischen Messsignals bzw. des optischen Kompensationssignals bzw. zwecks Empfangs eines optischen Signals und zur Auswertung des empfangenen optischen Signals zwecks Erzeugung eines die Vermessung der optischen Signalübertragungsstrecke repräsentierenden Auswertesignals und
**dadurch gekennzeichnet,**
- **dass** bei deaktiviertem und damit nicht mit dem modulierten Ansteuersignal angesteuerten Messsender (H1,H2,H3) folgende Kalibrationsschritte durchgeführt werden:
- der mindestens eine Kompensationssender (K) sendet ein Kompensationssignal und der mindestens eine Empfänger (D) empfängt dieses Kompensationssignal, und
- die Amplitude des Kompensationssignals wird derart eingestellt, dass sich in der Ansteuer- und Auswerteeinheit (17) ein elektrisches Messsignal mit einer Amplitude einstellt, die oberhalb der Amplitude eines von dem mindestens einen Empfänger (D) und/oder der Ansteuer- und Auswerteeinheit (17) erzeugten Signalrauschens ist,
- wobei die Vorrichtung nach Durchführung dieser Kalibrationsschritte kalibriert ist und während eines anschließenden, zum Zwecke des Erkennens eines Objekts und/oder einer Bewegung eines Objekts und/oder einer Bewegungsrichtung eines Objekts erfolgenden Sendens von modulierten Messsendesignalen von der Ansteuer- und Auswerteeinheit (17) zur Ansteuerung des Kompensationssenders (K) ein gegenphasig zum Kompensationssignal und damit in Phase mit dem Messsendesignal liegendes moduliertes Offset-Signal mit einer Amplitude bereitstellt, die gleich der Amplitude des im Signalpfad nach dem mindestens einen Empfänger (D) durch das Kompensationssignal des Kompensationssenders (K) hervorgerufenen Signals ist.

## Claims

1. A method for calibrating an apparatus for measuring an optical signal transmission path, particularly for detection of an object and/or for detection of a movement and/or a direction of movement of an object,
- wherein said apparatus is provided with
- at least one measurement transmitter (H1,H2,H3) for transmitting an optical measuring signal,
- at least one compensation transmitter (K) for transmitting a compensation signal of inverse phase relation to the optical signal of the at least one measurement transmitter (H1,H2,H3),
- at least one receiver (D) for alternate reception of the optical signal of the at least one measurement transmitter (H1,H2,H3) and the optical compensation signal of the at least one compensation transmitter (K), and
- a control and evaluation unit (17) operative to control the at least one measurement transmitter (H1,H2,H3) by a first modulated control signal, the at least one compensation transmitter (K) by a second modulated control signal, and the at least one receiver (D), for transmitting the optical measuring signal and respectively the optical compensation signal, and respectively for receiving an optical signal, and operative to evaluate the received optical signal for generating an evaluation signal representing the measurement of the optical signal transmission path, and
**characterized in**
- **that**, in the state when the measurement transmitter (H1,H2,H3) is deactivated and thus is not controlled by the modulated control signal, the following calibration steps are performed:
- the least one compensation transmitter (K) transmits a compensation signal and the at least one receiver (D) receives said compensation signal, and
- the amplitude of the compensation signal is adjusted in a manner causing an electrical measuring signal in the control and evaluation unit (17) that has an amplitude higher than the amplitude of a signal noise generated by the at least one receiver (D) and/or by the control and evaluation unit (17),
- wherein, after performing these calibration steps, the apparatus is in a calibrated state and, during subsequent transmission of modulated measuring transmission signals from the control and evaluation unit (17) for controlling the compensation transmitter (K), said transmission performed for the purpose of detection of an object and/or detection of a movement and/or a direction of movement of an object, the apparatus provides a modulated offset signal being opposite in phase to the compensation signal and thus in phase with the measuring transmission signal, said modulated offset signal having an amplitude equal to the amplitude of the signal generated in the signal path after the at least one receiver (D) by the compensation signal of the compensation transmitter (K).

## Revendications

1. Procédé d'étalonnage d'un dispositif de mesure d'une ligne de transmission de signaux optiques, notamment pour la reconnaissance d'un objet et/ou pour la reconnaissance d'un mouvement et/ou d'une direction de mouvement d'un objet,
- le dispositif étant pourvu de :
- au moins un émetteur de mesurage (H1, H2, H3) pour émettre un signal optique de mesurage,
- au moins un émetteur de compensation (K) pour émettre un signal de compensation qui est en opposition de phase par rapport au signal optique dudit au moins un émetteur de mesurage (H1, H2, H3),
- au moins un récepteur (D) pour recevoir en alternance le signal optique dudit au moins un émetteur de mesurage (H1, H2, H3) et le signal optique de compensation dudit au moins un émetteur de compensation (K) et
- une unité de commande et d'exploitation (17) pour commander ledit au moins un émetteur de mesurage (H1, H2, H3) par un premier signal de commande modulé, ledit au moins un émetteur de compensation (K) par un deuxième signal de commande modulé et ledit au moins un récepteur (D) en vue de l'émission respectivement du signal optique de mesurage ou du signal optique de compensation ou en vue de la réception d'un signal optique et pour l'exploitation du signal optique reçu en vue de la génération d'un signal d'exploitation représentant le mesurage de la ligne de transmission de signaux optiques, et
**caractérisé en ce que**
- les étapes d'étalonnage suivantes sont mises en oeuvre lorsque l'émetteur de mesurage (H1, H2, H3) est désactivé et n'est donc pas commandé par le signal de commande modulé :
- ledit au moins un émetteur de compensation (K) émet un signal de compensation et ledit au moins un récepteur (D) reçoit ce signal de compensation et
- l'amplitude du signal de compensation est réglée de façon telle qu'il en résulte dans l'unité de commande et d'exploitation (17) un signal électrique de mesurage avec une amplitude supérieure à l'amplitude d'un bruit de fond de signal engendré par ledit au moins un récepteur (D) et/ou l'unité de commande et d'exploitation (17),
- le dispositif étant calibré après la mise en oeuvre de ces étapes d'étalonnage et fournissant, lors de l'émission de signaux d'émission de mesurage modulés par l'unité de commande et d'exploitation (17) pour la commande de l'émetteur de compensation (K), pour la reconnaissance d'un objet et/ou pour la reconnaissance d'un mouvement et/ou d'une direction de mouvement d'un objet, un signal offset, en opposition de phase par rapport au signal de compensation et ainsi en phase avec le signal d'émission de mesurage, avec une amplitude qui est égale à l'amplitude du signal engendré, sur le chemin de transmission de signal en aval dudit au moins un récepteur (D), par le signal de compensation de l'émetteur de compensation (K).
